# FASCICULE DE BREVET EUROPEEN

(11) **EP 1 834 559 B1**
(45) Date de publication et mention de la délivrance du brevet: **12.04.2017**
(21) Numéro de dépôt: 07104072.9
(22) Date de dépôt: 13.03.2007
(51) Int. Cl.: A47J 43/07

(54) **APPAREIL DE PRÉPARATION CULINAIRE ÉQUIPÉ DE MOYENS DE DÉTECTION DU BALOURD**
GERÄT ZUR ZUBEREITUNG VON SPEISEN, DAS MIT MITTELN ZUR ERKENNUNG EINER UNWUCHT AUSGERÜSTET IST
FOOD PREPARATION DEVICE EQUIPPED WITH MEANS FOR DETECTING UNBALANCE

(30) Priorité: 13.03.2006 FR 0650840
(43) Date de publication de la demande: 19.09.2007
(73) Titulaire: SEB S.A., 69130 Ecully (FR)
(72) Inventeur: Leterrier, Thomas, 50000, Saint-Lo (FR); Herrada, José Luis, 38200, Vienne (FR); Beule, Mickael, M., 14400 Crouay (FR); Gerard, Emmanuel, M., 61410 Couterne (FR)
(74) Mandataire: Blanchard, Eugène Gilles

(56) Documents cités:
- EP-A1- 0 091 336
- EP-A1- 0 396 059
- EP-A1- 0 561 259
- EP-A2- 0 972 483
- EP-A2- 1 553 680
- EP-A2- 1 650 850
- US-A- 4 114 286

## Description

La présente invention concerne le domaine technique des appareils électroménagers de préparation culinaire comprenant un châssis supportant un récipient de travail à l'intérieur duquel est disposé un outil de travail entraîné en rotation par un moteur électrique solidaire du châssis.

De tels appareils électroménagers sont généralement conçus pour que le récipient et l'outil soient démontables pour permettre leur nettoyage et éventuellement leur remplacement en fonction des préparations culinaires envisagées.

De manière connue, un appareil électroménager du type ci-dessus peut être utilisé pour la préparation de pâte à pain. Dans le cadre d'une telle utilisation, l'outil peut alors être amené à malaxer dans le récipient de travail une quantité relativement importante d'ingrédients représentant un poids total de quelques kilos. Or, après un certain temps de malaxage, la pâte en cours de préparation est susceptible de s'agglomérer sur l'outil en une masse inégalement répartie qui peut éventuellement être projetée violemment par effet centrifuge contre la paroi périphérique du récipient de travail. Ces phénomènes d'agglomération et de projection, créant un balourd au niveau de l'outil de travail, sont alors susceptibles d'entraîner des mouvements et déplacements de l'appareil électroménager sur la surface sur laquelle il repose voire de déséquilibrer l'appareil électroménager jusqu'à entraîner un basculement ou une chute de ce dernier.

Il est donc apparu le besoin de disposer d'un appareil électroménager qui puisse être utilisé pour la préparation de diverses préparations culinaires et notamment de pâtes telles que la pâte à pain tout en étant susceptible de réduire autant que faire se peut les risques liés à l'apparition d'un balourd au niveau de l'outil de travail.

Afin d'atteindre cet objectif, une demande de brevet européen EP 1 553 680 a proposé un appareil électroménager de préparation culinaire comprenant : un châssis, un récipient de travail adapté sur le châssis, un outil de travail rotatif disposé dans le récipient de travail, un moteur électrique solidaire du châssis entraînant en rotation l'outil de travail, ainsi que des moyens de commande du moteur électrique. Selon cette demande de brevet, l'appareil comprend, en outre, des moyens de détection de l'apparition d'un balourd au niveau de l'outil de travail dans le récipient de travail pendant le fonctionnement du moteur électrique qui mettent en oeuvre des capteurs piézo-électriques associés à une unité de calcul pour émettre un signal d'apparition de balourd en fonction de l'évolution des efforts mesurés au niveau des capteurs pendant le fonctionnement du moteur électrique.

La mise en oeuvre de moyens de détection de l'apparition d'un balourd au niveau de l'outil de travail permet de détecter au plus tôt l'apparition d'un balourd le plus souvent avant même que ce dernier n'ait eu sur l'appareil électroménager un effet visible pour son utilisateur.

Toutefois, si la mise en oeuvre de capteurs piézo-électriques permet effectivement une détection de l'apparition d'un balourd, elle présente néamoins d'être relativement onéreuse en raison du coût des capteurs et de la nécessité d'en effectué un étalonnage fin. De plus, la mesure effectuée par les capteurs peut être affectée par des paramètres extérieurs indépendants du risque d'apparition de balourd comme par exemple une pression exercée par un utilisateur sur le châssis de l'appareil.

Il est donc apparu le besoin de disposer d'un appareil dont le système de détection de balourd soit moins onéreux que les capteurs piézo-électriques, moins sensible à des influences extérieures et plus facile à mettre en oeuvre.

Afin d'atteindre ces objectifs, l'invention concerne un appareil électroménager de préparation culinaire qui comprend :
▪ un châssis,
▪ un récipient de travail adapté sur le châssis,
▪ un outil de travail rotatif disposé dans le récipient de travail,
▪ un moteur électrique solidaire du châssis entraînant en rotation l'outil de travail,
▪ des moyens de commande du moteur électrique,
▪ et des moyens de détection de l'apparition d'un balourd au niveau de l'outil de travail dans le récipient de travail pendant le fonctionnement du moteur électrique, les moyens de détection étant adaptés pour émettre un signal en cas d'apparition d'un balourd,

Selon l'invention, l'appareil électroménager de préparation culinaire est caractérisé en ce que les moyens de détection de l'apparition d'un balourd comprennent des moyens de mesure d'au moins un paramètre de fonctionnement du moteur électrique et sont adaptés pour émettre un signal d'apparition de balourd en fonction de la variation du paramètre de fonctionnement du moteur électrique.

Au sens de l'invention, il faut entendre par paramètres de fonctionnement du moteur électrique notamment sa vitesse de rotation, sa tension et /ou son intensité, la puissance électrique absorbée. Dans certains cas, lorsque les caractéristiques du moteur électrique sont parfaitement connues, la connaissance d'un ou deux des paramètres permet de connaître les autres paramètres de sorte que ces paramètres peuvent être considérés comme des équivalents les uns des autres.

Selon une caractéristique de l'invention et dans le cadre de la première variante de réalisation, les moyens de détection de l'apparition d'un balourd sont adaptés pour émettre un signal d'apparition de balourd lorsque la variation du paramètre de fonctionnement est supérieure à une valeur prédéterminée. Cette valeur prédéterminée correspond alors à un seuil en deçà duquel les variations sont considérées comme correspondant à un fonctionnement normal de l'appareil tandis qu'au-delà de ce seuil les variations résultent de l'apparition d'un balourd excessif au niveau de l'outil de travail de sorte qu'il est nécessaire d'en informer l'utilisateur et/ou de modifier automatiquement le mode de fonctionnement de l'appareil électroménager pour le placer dans une situation sans risque pour l'utilisateur.

Selon une autre caractéristique de l'invention et afin d'éviter de prendre en considération des variations de brève durée dont les causes peuvent être diverses et éventuellement extérieures à l'appareil électroménager, les moyens de détection de l'apparition d'un balourd sont adaptés pour calculer une moyenne de la variation du paramètre de fonctionnement du moteur électrique sur un intervalle de temps glissant et pour émettre un signal d'apparition de balourd lorsque la variation de la moyenne du paramètre de fonctionnement est supérieure à une valeur prédéterminée ou seuil.

Selon l'invention la valeur prédéterminée ou seuil, par rapport à laquelle la variation du paramètre de fonctionnement du moteur électrique est comparée, est déterminée en fonction de l'appareil électroménager et notamment de la contenance du récipient de travail ainsi que des caractéristiques du moteur électrique.

Selon une caractéristique de l'invention, les moyens de détection de l'apparition d'un balourd sont adaptés pour émettre un signal d'apparition de balourd lorsque la variation du paramètre de fonctionnement ou de la moyenne du paramètre de fonctionnement est supérieure à une valeur prédéterminée correspondant à une augmentation de puissance absorbée par le moteur électrique supérieure ou égale à 700 W.

Selon l'invention, le signal d'apparition de balourd émis par les moyens de détection peut être de différentes natures telles que visuelle et/ou sonore pour avertir l'utilisateur de l'appareil électroménager d'arrêter ce dernier ou de modifier son mode fonctionnement. Le signal d'apparition de balourd peut également être de nature électrique ou électronique pour être traité par les moyens de commande pour adapter de façon automatique le fonctionnement du moteur électrique à la nouvelle situation afin d'éviter un comportement dangereux de l'appareil électroménager.

Ainsi, selon une autre caractéristique de l'invention et dans une forme préférée de réalisation de l'appareil électroménager de préparation culinaire, les moyens de détection sont reliés aux moyens de commande qui sont adaptés pour modifier le mode de fonctionnement du moteur électrique en fonction du signal émis par les moyens de détection.

Dans le cadre de la forme préférée de réalisation de l'appareil électroménager de préparation culinaire conforme à l'invention et selon une autre caractéristique de l'invention, les moyens de commande sont adaptés pour permettre une sélection d'au moins deux vitesses ou modes de fonctionnement du moteur et en ce que les moyens de détection sont adaptés pour émettre un signal d'apparition de balourd en fonction de la vitesse ou du mode de fonctionnement sélectionné. Cette caractéristique de l'invention est particulièrement adaptée aux appareils électroménagers de préparation culinaire, dits multi-usages, dans la mesure où ils peuvent être utilisés avec des outils de travail de différentes natures induisant des comportements différents dont certains pourraient être détectés comme une apparition de balourd dans le cadre d'une préparation de pâte avec l'outil prévu à cet effet alors qu'ils correspondent à un fonctionnement normal avec l'outil effectivement utilisé.

Selon une autre caractéristique de l'invention, les moyens de commande de l'appareil électroménager sont adaptés pour :
▪ permettre la sélection d'au moins deux vitesses de fonctionnement du moteur dont la plus faible est dite vitesse basse,
▪ lors de la réception d'un signal d'apparition de balourd : soit faire fonctionner le moteur à une vitesse inférieure à sa vitesse de fonctionnement avant le signal s'il fonctionnait à une vitesse supérieure à la vitesse basse, soit interrompre le fonctionnement du moteur s'il fonctionnait à la vitesse basse.

Cette dernière caractéristique de l'invention permet de manière fort avantageuse d'adapter le fonctionnement de l'appareil électroménager sans pour autant l'arrêter systématiquement en cas d'apparition de balourd, ce qui procure un plus grand confort d'utilisation en évitant à l'utilisateur de devoir redémarrer l'appareil électroménager si la préparation culinaire n'a pas la consistance recherchée.

Selon encore une autre caractéristique de l'invention, les moyens de commande de l'appareil électroménager sont adaptés pour interrompre le fonctionnement du moteur lors de la réception d'un signal d'apparition de balourd. Cette caractéristique de l'invention est particulièrement adaptée aux appareils électroménagers de conception simple qui ne comportent par exemple qu'une seule vitesse de fonctionnement.

Selon une caractéristique de l'invention, l'appareil électroménager de préparation culinaire comprend un organe de commande qui est mobile entre une position de repos et une position active et qui est asservi en position de repos. Les moyens de commande sont alors adaptés pour, lorsque l'organe de commande est en position active, faire fonctionner le moteur sans tenir compte d'un éventuel signal d'apparition de balourd et/ou en neutralisant les moyens de détection. Cette caractéristique de l'invention permet à l'utilisateur de l'appareil électroménager de faire fonctionner ce dernier sans que le fonctionnement ne soit perturbé par les moyens de détection de balourd, la sécurité d'utilisation de l'appareil étant assurée par l'utilisateur lui-même qui arrête le fonctionnement du moteur électrique en relâchant son action sur l'organe de commande. Cette caractéristique est plus particulièrement adaptée au cas où l'action sur l'organe de commande permet de faire fonctionner le moteur électrique à sa vitesse et/ou puissance maximale.

Selon une autre caractéristique de l'invention et afin de permettre à l'utilisateur de gérer tous les modes de fonctionnement de l'appareil électroménager, ce dernier comprend des moyens de neutralisation des moyens de détection.

Bien entendu, les différentes caractéristiques de l'invention évoquées ci-dessus peuvent être mises en oeuvre les unes avec les autres selon différentes combinaisons lorsqu'elles ne sont pas exclusives les unes des autres ou incompatibles.

Par ailleurs, diverses autres caractéristiques de l'invention ressortent de la description faite ci-dessous en référence aux dessins annexés qui montrent, à titre d'exemples non limitatifs, des formes de réalisation de l'objet de l'invention.

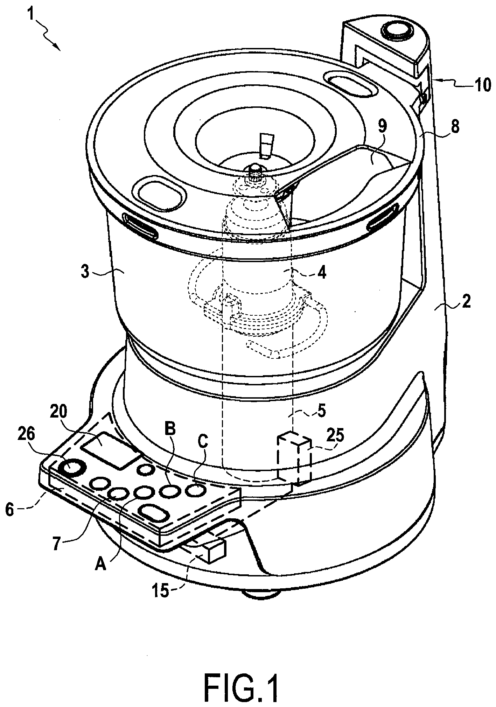

La **fig. 1** est une perspective d'une forme de réalisation d'un appareil électroménager de préparation culinaire selon l'invention.

Un appareil électroménager de préparation culinaire tel qu'illustré à la figure **1** et désigné dans son ensemble par la référence **1** comprend un châssis **2** sur lequel est adapté un récipient de travail **3** de préférence amovible. De manière connue, le récipient **3** présente un orifice central non représenté pour le passage d'un arbre également non représenté de fixation d'un outil de travail **4** disposé à l'intérieur du récipient **3**. L'appareil électroménager comprend alors, comme le montre la figure **2**, un moteur électrique **5** solidaire du châssis **2** et adapté pour entraîner en rotation l'outil de travail **4** à l'intérieur du récipient **3**.

Afin d'assurer le pilotage du moteur **5**, l'appareil électroménager **1** comprend en outre des moyens de commande **6** associés à différentes touches **7** permettant de sélectionner des modes de fonctionnement et/ou des vitesses de fonctionnement du moteur électrique **5**. Selon l'exemple illustré, les moyens de commande **6** comprennent trois touches A,B,C permettant de sélectionner trois vitesses croissantes du moteur dont la plus basse sélectionnée à l'aide de la touche A correspond à une vitesse adaptée pour le pétrissage.

L'appareil électroménager **1** comprend également un couvercle **8** pourvu d'une fenêtre **9** d'introduction d'ingrédients culinaires dans le récipient **3**. Le couvercle **8** est adapté de manière amovible sur le récipient de travail **3** et se trouve associé à des moyens de sécurité **10** neutralisant le fonctionnement du moteur électrique **5** en cas d'absence du couvercle **8**.

L'appareil électroménager **1** ainsi constitué est particulièrement adapté pour des préparations culinaires du type pâte à pain ou pâte à tarte. Or, dans certaines conditions, après un temps excessif de malaxage à la vitesse A de pétrissage, la pâte à pain s'échauffe et prend une consistance visqueuse de sorte qu'elle s'agglomère de manière irrégulière autour de l'outil de travail **4** créant alors un balourd. La rotation de l'outil de travail **4** portant ce balourd engendre des oscillations qui déséquilibrent l'appareil électroménager **1** au point de le déplacer sur le plan de travail sur lequel il repose voire de le faire basculer.

Une tel phénomène de balourd apparaît également, et de façon encore plus rapide, lorsque l'utilisateur effectue le pétrissage de la pâte à une vitesse excessive, par exemple sur les vitesses B ou C.

Afin d'éviter un tel fonctionnement de l'appareil électroménager pouvant être dangereux pour son utilisateur, l'invention préconise de mettre en oeuvre des moyens **15** de détection de balourd.

Selon l'invention, la détection de l'apparition d'un balourd est réalisée en mesurant un paramètre de fonctionnement du moteur électrique.

À cet effet, les moyens de détection **15** comprennent des moyens de mesure **25** qui mesurent à intervalles réguliers une vitesse instantanée Vi(t) du moteur électrique **5**.

Les moyens de détection de balourd **15** en association avec les moyens de commande **6** sont mis en oeuvre de la manière suivante lors de l'utilisation de l'appareil électroménager **1**.

Lors de la mise en fonctionnement du moteur électrique **5**, les moyens **15** sont placés dans un mode de détection de balourd. Les moyens **15** de détection d'apparition d'un balourd calculent alors à partir de la vitesse instantanée Vi(t) mesurée par les moyens **25** la variation δV de la vitesse instantanée avec δV(t)= Vi(t-1)-Vi(t) puis une moyenne glissante δVm(t), sur les n dernières valeurs, de la variation de la vitesse instantanée. Les n dernières valeurs correspondent selon l'exemple illustré à un intervalle de temps glissant de l'ordre de 2 secondes. Les moyens de détection **15** calculent enfin une variation de la moyenne glissante ΔδVm avec ΔδVm(t)=δVm(t)-δVm(t-1).

Lorsque la variation de la moyenne glissante est supérieure à un seuil ou à une valeur donnée, les moyens de détection de balourd émettent un signal d'apparition de balourd. Dans le cadre d'un moteur électrique présentant une puissance de l'ordre de 1200 W, la valeur seuil est choisie pour correspondre à une augmentation de puissance de la puissance absorbée par le moteur électrique **5** de l'ordre de 700 W.

Le signal d'apparition de balourd est alors traité par les moyens de commande.

Selon l'exemple illustré, la détection du balourd s'effectue également en fonction des modes de fonctionnement de l'appareil électroménager **1**.

Ainsi, lorsque le moteur **5** fonctionne à sa vitesse maximale **C** ou à sa vitesse intermédiaire **B** et que les moyens de détection émettent à destination des moyens de commande **6** un signal d'apparition de balourd, les moyens de commande réduisent de manière automatique la vitesse du moteur **5** pour le faire fonctionner à sa vitesse basse ou minimale **A**.

De la même manière, lorsque le moteur **5** fonctionne à sa vitesse basse **A** et que les moyens de détection **15** émettent à destination des moyens de commande **6** un signal d'apparition de balourd, et les moyens de commande stoppent le fonctionnement du moteur électrique **5**.

Selon la forme de réalisation illustrée, les moyens de commande **6** comprennent un organe de commande **26** qui est mobile entre une position de repos et une position active et qui est asservi en position de repos. L'organe de commande **26** forme ici un bouton poussoir qui, lorsqu'il est pressé, permet un fonctionnement de l'appareil **1** dans un mode généralement appelé «pulse » dans lequel le moteur électrique **5** délivre toute sa puissance. Les moyens de commande **6** sont alors adaptés pour, lorsque l'organe de commande **26** est en position active ou pressé, faire fonctionner le moteur sans tenir compte d'un éventuel signal d'apparition de balourd émis par les moyens de détection.

Bien entendu, selon l'invention, d'autres paramètres de fonctionnement du moteur électrique que la vitesse pourraient être utilisés pour détecter l'apparition d'un balourd. Ainsi, les moyens de détection pourraient mesurer directement la puissance absorbée par le moteur électrique.

De même, diverses autres modifications pourraient être apportées à l'appareil électroménager selon l'invention dans le cadre des revendications.

## Revendications

1. Appareil électroménager de préparation culinaire comprenant :
▪ un châssis (**2**),
▪ un récipient de travail (**3**) adapté sur le châssis (**2**),
▪ un outil (**4**) de travail rotatif disposé dans le récipient de travail (**3**),
▪ un moteur électrique (**5**) solidaire du châssis (**2**) entraînant en rotation l'outil de travail (**4**),
▪ des moyens (**6**) de commande du moteur électrique (**5**),
▪ des moyens (**15**) de détection de l'apparition d'un balourd au niveau de l'outil de travail (**4**) dans le récipient de travail (**3**) pendant le fonctionnement du moteur électrique (**5**), les moyens de détection (**15**) étant adaptés pour émettre un signal en cas d'apparition d'un balourd,
**caractérisé en ce que**
▪ les moyens (**15**) de détection de l'apparition d'un balourd comprennent des moyens (**25**) de mesure d'au moins un paramètre de fonctionnement du moteur électrique et sont adaptés pour émettre un signal d'apparition de balourd en fonction de la variation du paramètre de fonctionnement du moteur électrique.

2. Appareil électroménager selon la revendication **1**, **caractérisé en ce que** les moyens (**15**) de détection de l'apparition d'un balourd sont adaptés pour émettre un signal d'apparition de balourd lorsque la variation du paramètre de fonctionnement est supérieure à une valeur prédéterminée.

3. Appareil électroménager selon la revendication **2**, **caractérisé en ce que** les moyens (**15**) de détection de l'apparition d'un balourd sont adaptés pour calculer une moyenne de la variation du paramètre de fonctionnement du moteur électrique sur un intervalle de temps glissant et pour émettre un signal d'apparition de balourd lorsque la variation de la moyenne du paramètre de fonctionnement est supérieure à une valeur prédéterminée.

4. Appareil électroménager selon la revendication **1** ou **3**, **caractérisé en ce que** les moyens (**15**) de détection de l'apparition d'un balourd sont adaptés pour émettre un signal d'apparition de balourd lorsque la variation du paramètre de fonctionnement ou de la moyenne du paramètre de fonctionnement est supérieure à une valeur prédéterminée correspondant à une augmentation de puissance absorbée par le moteur électrique supérieure ou égale à 700 W.

5. Appareil électroménager de préparation culinaire selon l'une quelconque des revendications 1 à 4, **caractérisé en ce que** les moyens de détection (**15**) sont reliés aux moyens de commande (**6**) qui sont adaptés pour modifier le mode de fonctionnement du moteur électrique (**5**) en fonction du signal émis par les moyens de détection (**15**).

6. Appareil électroménager de préparation culinaire selon l'une quelconque des revendications **1** à **5**, **caractérisé en ce que** les moyens de commande (**6**) sont adaptés pour permettre une sélection d'au moins deux vitesses (A,B) ou modes de fonctionnement du moteur et **en ce que** les moyens de détection (**15**, **25**) sont adaptés pour émettre un signal d'apparition de balourd en fonction de la vitesse ou du mode de fonctionnement sélectionné.

7. Appareil électroménager de préparation culinaire selon la revendication 5 ou 6, **caractérisé en ce que** les moyens de commande (**6**) sont adaptés pour :
▪ permettre la sélection d'au moins deux vitesses (A,B) de fonctionnement du moteur dont la plus faible est dite vitesse basse (A),
▪ lors de la réception d'un signal d'apparition de balourd : soit faire fonctionner le moteur à une vitesse inférieure à sa vitesse de fonctionnement avant le signal s'il fonctionnait à une vitesse supérieure à la vitesse basse, soit interrompre le fonctionnement du moteur s'il fonctionnait à la vitesse basse.

8. Appareil électroménager de préparation culinaire selon la revendication 5 ou 6, **caractérisé en ce que** les moyens de commande (**6**) sont adaptés pour interrompre le fonctionnement du moteur lors de la réception d'un signal d'apparition de balourd.

9. Appareil électroménager de préparation culinaire selon l'une des revendications 5 à 6, **caractérisé en ce qu'**il comprend un organe de commande (**26**) qui est mobile entre une position de repos et une position active et qui est asservi en position de repos, et **en ce que** les moyens de commande (**6**) sont adaptés pour, lorsque l'organe de commande est en position active, faire fonctionner le moteur sans tenir compte d'un éventuel signal d'apparition de balourd et/ou en neutralisant les moyens de détection (**15**,**25**).

10. Appareil électroménager de préparation culinaire selon l'une des revendications 1 à 9, **caractérisé en ce qu'**il comprend des moyens de neutralisation des moyens de détection.

## Patentansprüche

1. Elektrisches Haushaltsgerät für die Zubereitung von Speisen, umfassend:
- ein Gestell (2),
- einen auf das Gestell (2) aufgesetzten Arbeitsbehälter (3),
- ein rotierendes Arbeitswerkzeug (4), das in dem Arbeitsbehälter (3) angeordnet ist,
- einen mit dem Gestell (2) fest verbundenen Elektromotor (5), der das Arbeitswerkzeug (4) drehantreibt,
- Mittel (6) zum Steuern des Elektromotors (5),
- Mittel (15) zur Erfassung des Auftretens einer Unwucht im Bereich des Arbeitswerkzeugs (4) in dem Arbeitsbehälter (3) während des Betriebs des Elektromotors (5), wobei die Erfassungsmittel (15) dazu ausgelegt sind, im Fall des Auftretens einer Unwucht ein Signal auszusenden,
**dadurch gekennzeichnet, dass**
- die Mittel (15) zur Erfassung des Auftretens einer Unwucht Mittel (25) zum Messen wenigstens eines Betriebsparameters des Elektromotors umfassen und dazu ausgelegt sind, in Abhängigkeit von der Änderung des Betriebsparamaters des Elektromotors ein Signal für das Auftreten einer Unwucht auszusenden.

2. Elektrisches Haushaltsgerät nach Anspruch 1, **dadurch gekennzeichnet, dass** die Mittel (15) zur Erfassung des Auftretens einer Unwucht dazu ausgelegt sind, ein Signal für das Auftreten einer Unwucht auszusenden, wenn die Änderung des Betriebsparameters grösser als ein vorbestimmter Wert ist.

3. Elektrisches Haushaltsgerät nach Anspruch 2, **dadurch gekennzeichnet, dass** die Mittel (15) zur Erfassung des Auftretens einer Unwucht dazu ausgelegt sind, einen Mittelwert der Änderung des Betriebsparameters des Elektromotors über eine gleitende Zeitspanne zu berechnen und ein Signal für das Auftreten einer Unwucht auszusenden, wenn die Änderung des Mittelwerts des Betriebsparameters grösser als ein vorbestimmter Wert ist.

4. Elektrisches Haushaltsgerät nach Anspruch 1 oder 3, **dadurch gekennzeichnet, dass** die Mittel (15) zur Erfassung des Auftretens einer Unwucht dazu ausgelegt sind, ein Signal für das Auftreten einer Unwucht auszusenden, wenn die Änderung des Betriebsparamaters oder des Mittelwerts des Betriebsparameters grösser als ein vorbestimmter Wert, welcher einer Erhöhung der durch den Elektromotor aufgenommenen Leistung grösser als oder gleich 700 W entspricht, ist.

5. Elektrisches Haushaltsgerät für die Zubereitung von Speisen, nach einem der Ansprüche 1 bis 4, **dadurch gekennzeichnet, dass** die Erfassungsmittel (15) mit den Steuermitteln (6) verbunden sind, welche dazu ausgelegt sind, die Betriebsart des Elektromotors (5) in Abhängigkeit des durch die Erfassungsmittel (15) ausgesandten Signals zu ändern.

6. Elektrisches Haushaltsgerät für die Zubereitung von Speisen, nach einem der Ansprüche 1 bis 5, **dadurch gekennzeichnet, dass** die Steuermittel (6) dazu ausgelegt sind, eine Auswahl von wenigstens zwei Geschwindigkeiten (A, B) oder Betriebsarten des Motors zu ermöglichen, und dass die Erfassungsmittel (15, 25) dazu ausgelegt sind, in Abhängigkeit von der gewählten Geschwindigkeit oder Betriebsart ein Signal für das Auftreten einer Unwucht auszusenden.

7. Elektrisches Haushaltsgerät für die Zubereitung von Speisen, nach Anspruch 5 oder 6, **dadurch gekennzeichnet, dass** die Steuermittel (6) dazu ausgelegt sind:
- die Auswahl von wenigstens zwei Betriebsgeschwindigkeiten (A, B) des Motors, von denen die geringste die sogenannte niedrige Geschwindigkeit (A) ist, zu ermöglichen,
- bei Empfang eines Signals für das Auftreten einer Unwucht, entweder den Motor mit einer niedrigeren Geschwindigkeit als seiner Betriebsgeschwindigkeit vor dem Signal laufen zu lassen, wenn er mit einer höheren Geschwindigkeit als der niedrigen Geschwindigkeit lief, oder den Betrieb des Motors zu unterbrechen, wenn er mit der niedrigen Geschwindigkeit lief.

8. Elektrisches Haushaltsgerät für die Zubereitung von Speisen, nach Anspruch 5 oder 6, **dadurch gekennzeichnet, dass** die Steuermittel (6) dazu ausgelegt sind, den Betrieb des Motors bei Empfang eines Signals für das Auftreten einer Unwucht zu unterbrechen.

9. Elektrisches Haushaltsgerät für die Zubereitung von Speisen, nach einem der Ansprüche 5 bis 6, **dadurch gekennzeichnet, dass** es ein Betätigungsorgan (26) umfasst, das zwischen einer Ruhestellung und einer aktiven Stellung beweglich ist und das in Ruhestellung geregelt wird, und dass die Steuermittel (6) dazu ausgelegt sind, den Motor dann, wenn das Betätigungsorgan sich in der aktiven Stellung befindet, ohne Rücksicht auf ein mögliches Signal für das Auftreten einer Unwucht und/oder durch Neutralisieren der Erfassungsmittel (15, 25) laufen zu lassen.

10. Elektrisches Haushaltsgerät für die Zubereitung von Speisen, nach einem der Ansprüche 1 bis 9, **dadurch gekennzeichnet, dass** es Mittel zum Neutralisieren der Erfassungsmittel umfasst.

## Claims

1. A household electrical appliance for preparing food, said household electrical appliance comprising:
· a support structure (2);
· a work receptacle (3) adapted to fit onto the support structure (2);
· a rotary work tool (4) disposed in the work receptacle (3);
· an electric motor (5) secured to the support structure (2) and driving the work tool (4) in rotation;
· control means (6) for controlling the electric motor (5);
· detector means (15) for detecting occurrence of unbalance at the work tool (4) in the work receptacle (3) while the electric motor (5) is operating, the detector means (15) being adapted to transmit a signal in the event unbalance occurs;
said household electrical appliance being **characterized in that** the detector means (15) for detecting occurrence of unbalance comprise means (25) for measuring at least one operating parameter of the electric motor and are adapted to transmit an unbalance occurrence signal as a function of the variation in the operating parameter of the electric motor.

2. A household electrical appliance according to claim 1, **characterized in that** the detector means (15) for detecting occurrence of unbalance are adapted to transmit an unbalance occurrence signal whenever the variation in the operating parameter is greater than a predetermined value.

3. A household electrical appliance according to claim 2, **characterized in that** the detector means (15) for detecting occurrence of unbalance are adapted to calculate a mean of the variation in the operating parameter of the electric motor over a moving time interval and to transmit an unbalance occurrence signal whenever the variation in the mean of the operating parameter is greater than a predetermined value.

4. A household electrical appliance according to claim 1 or claim 3, **characterized in that** the detector means (15) for detecting occurrence of unbalance are adapted to transmit an unbalance occurrence signal whenever the variation in the operating parameter or in the mean of the operating parameter is greater than a predetermined value corresponding to an increase in power absorbed by the electric motor that is greater than or equal to 700 W.

5. A household electrical appliance for preparing food according to any one of claims 1 to 4, **characterized in that** the detector means (15) are connected to the control means (6) that are adapted to change the mode of operation of the electric motor (5) as a function of the signal transmitted by the detector means (15).

6. A household electrical appliance for cooking food according to any one of claims 1 to 5, **characterized in that** the control means (6) are adapted to make it possible to select at least two speeds (A, B) or modes of operation of the motor, and **in that** the detector means (15, 25) are adapted to transmit an unbalance occurrence signal as a function of the selected speed or mode of operation.

7. A household electrical appliance for preparing food according to claim 5 or claim 6, **characterized in that** the control means (6) are adapted:
· to make it possible to select at least two speeds (A, B) of operation of the motor, the lower of which speeds is referred to as the "low speed" (A);
· to act when an unbalance occurrence signal is received: either to cause the motor to operate at a speed less than its speed of operation before the signal if it was operating at a speed greater than the low speed; or to interrupt operation of the motor if it was operating at the low speed.

8. A household electrical appliance for preparing food according to claim 5 or claim 6, **characterized in that** the control means (6) are adapted to interrupt operation of the motor when an unbalance occurrence signal is received.

9. A household electrical appliance for preparing food according to claim 5 or claim 6, said household electrical appliance being **characterized in that** it further comprises a control member (26) that is mounted to move between a rest position and an active position, and that is servo-controlled in the rest position, and **in that** the control means (6) are adapted to act, when the control member is in the active position, to cause the motor to operate without taking into account any unbalance occurrence signal and/or while neutralizing the detector means (15, 25).

10. A household electrical appliance according to any one of claims 1 to 9, **characterized in that** it further comprises means for neutralizing the detector means.
